# EUROPEAN PATENT APPLICATION

(11) **EP 2 946 665 A1**
(43) Date of publication of application: **25.11.2015**
(21) Application number: 14168939.8
(22) Date of filing: 20.05.2014
(51) Int. Cl.: A01M 23/24, A01K 25/00

(54) **Muzzle clamps**

(71) Applicant: Grima, Paul, 2080 Malta (MT)
(72) Inventor: Grima, Paul, 2080 Malta (MT)
(74) Representative: Serravalle, Marco

(57) **Abstract**

Muzzle Clamps provided in general for animal control, the safety of Animal Control Officers and the public in general, and the prevention of harm to other animals and property by animal bites, and the prevention of the spreading of rabies and other diseases when properly used. Muzzle Clamps comprise at least one frame 1, to which at least one clamp 2 is moveably attached. Said clamp is triggered by at least one trigger 3. The said Muzzle Clamp may be detachably attached to a staff 8, which engages a socket 9, by means of any detaching mechanism, from which it may be released once the clamps have been triggered, released, snapped shut and closed so that the animal can be controlled by at least one leash as preferred. Said leash or leashes may be attached to at least one leash attachment rings 10, so that the animal may be handled without the risk or danger of biting said Animal Control Officers. The said Muzzle Clamps may have at least one pawl 6 which may be released so that the muzzle of the animal can be released again when desired, and so that the Muzzle Clamps can be used again.

## Description

The present invention relates to Muzzle Clamps which are provided in general for animal control, the safety of animal control officers and the public in general, and the prevention of harm to other animals and property by animal bites, and the prevention of the spreading of rabies and other diseases associated with animal bites when properly used.

One of the many risks and dangers that Animal Control Officers are exposed to are bites from the animals they are charged to control. When properly used the present invention eliminates the risk and danger to life and limb to said Officers, and the public in general of being bitten by potentially dangerous animals by clamping the muzzle of said animals shut in a way that the animal cannot open its jaws again before the Animal Control Officers consider it is safe to do so.

The present invention exploits the animal's aggressive instinct to attack the object in its immediate vicinity which is being used by the Animal Control Officers, which it believes to be invading its territory. The present invention also exploits the animal's defensive instinct to counterattack the object in its immediate vicinity which is being used by the Animal Control Officers, by which it feels threatened.

A detailed description of the Muzzle Clamps shall now be provided with reference to the annexed drawings in which:
Fig.1 is the top view of the closed Muzzle Clamps.
Fig.2 is the side view of the closed Muzzle Clamps.
Fig.3 is the side view of the set or open Muzzle Clamps.
Fig.4 is the top view of the set or open Muzzle Clamps.
Fig.5 is the exploded side view of the Muzzle Clamps.
Fig.6 is the exploded top view of the Muzzle Clamps.
Fig.7 is the exploded top view of the yokeless Muzzle Clamps.
Fig.8 is the exploded side view of the yokeless Muzzle Clamps.
Fig.9 is the side view of the set or open yokeless Muzzle Clamps.
Fig.10 is the side view of the closed yokeless Muzzle Clamps.
Fig.11 is the side view of the triggered Muzzle Clamps.
Fig.12 is the side view of the triggered yokeless Muzzle Clamps.
Fig.13 is the side view of the triggered Muzzle Clamps clamping an animal's muzzle.

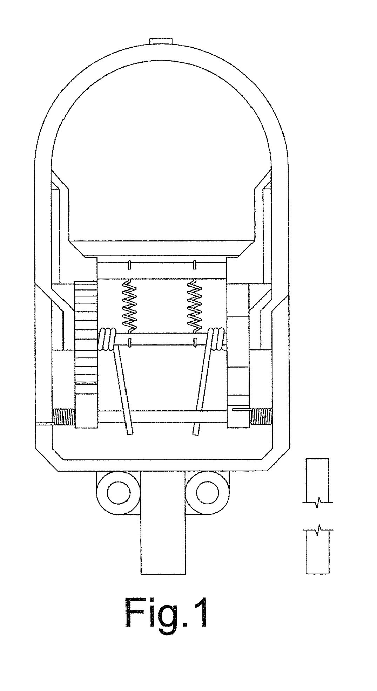

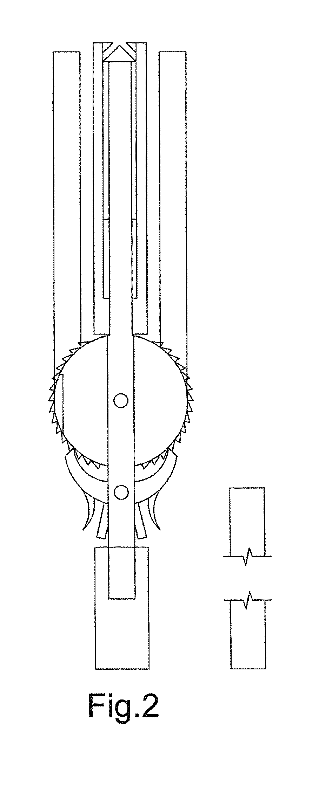

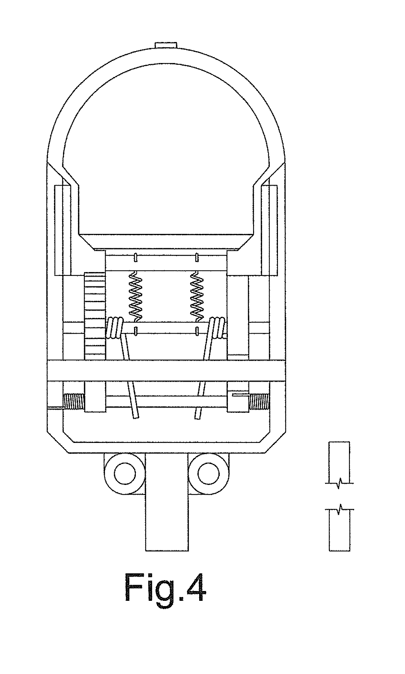

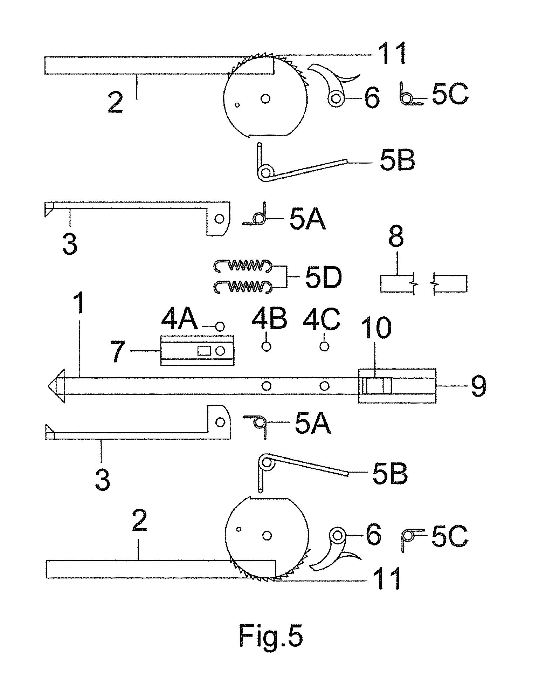

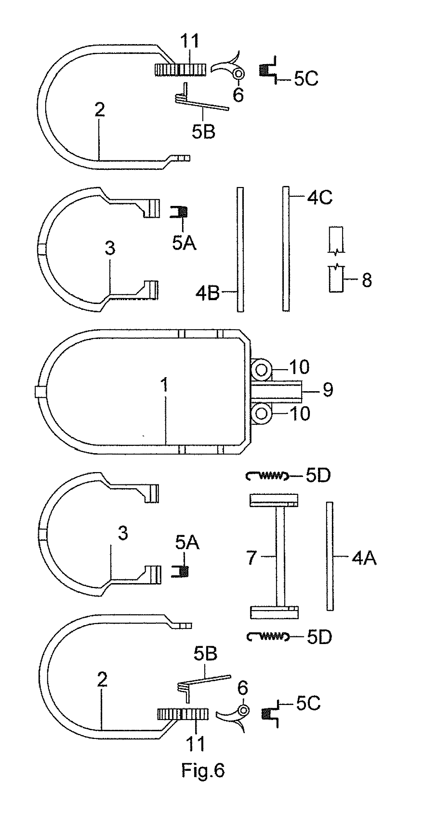

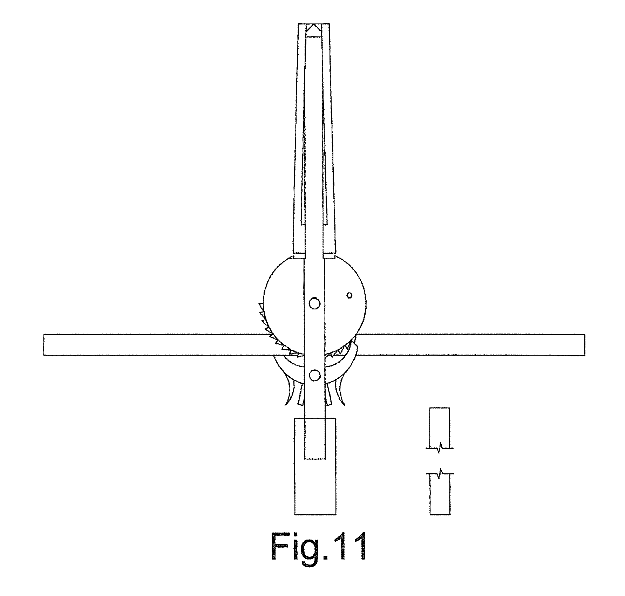

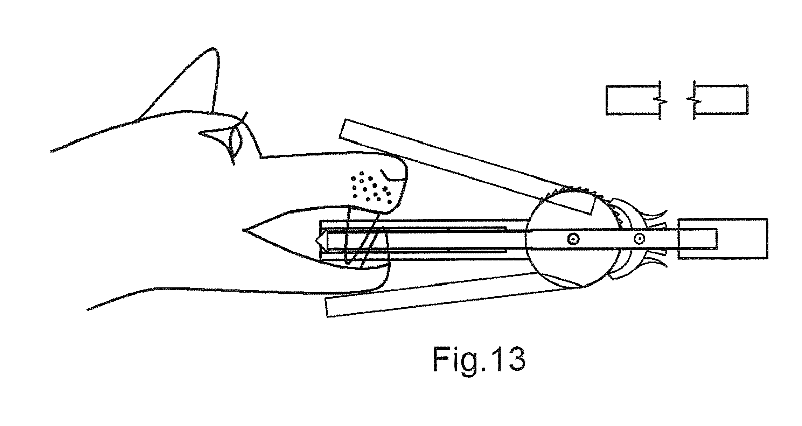

Referring now to figs.1 to 6, and fig.11, the Muzzle Clamps comprising at least one frame 1, onto which at least one yoke 7 is moveably attached in such a way that it can move on said frame 1. At least one axle 4A is attached to said yoke 7. At least one trigger 3 is moveably attached to said axle 4A. Said trigger 3 is kept ready by means of at least one spring 5A. At least one axle 4B is attached to said frame 1. At least one clamp 2 is moveably attached to said axle 4B. Said clamp 2 is kept open by means of at least one spring 5B. Said yoke 7 is pulled back against said clamp 2 by at least one spring 5D. At least one ratcheting mechanism 11 is attached to said at least one clamp 2. At least one axle 4C is attached to said frame 1. At least one pawl 6 is moveably attached to said axle 4C and operates on said ratcheting mechanism 11, and is pushed against said ratcheting mechanism 11 by at least one spring 5C. Said clamp 2 is triggered, released, snapped shut and is closed by said trigger 3. When said trigger 3 is pulled by the animal, as illustrated in fig.11, the clamp 2 is triggered, released, snapped shut and is closed as illustrated in figs.1, 2, and 13. If the trigger 3 is pulled, as illustrated in fig.11, the yoke 7 moves away from clamp 2 thus releasing said clamp 2. When trigger 3 is bitten, it is pushed toward the frame 1 and consequently pulled away from the clamp 2, as illustrated in fig.11. This releases the clamp 2 and spring 5B closes said clamp 2 as illustrated in fig.13. When the clamp 2 is triggered, released, snapped shut, and is closed by trigger 3, the ratcheting mechanism 11 automatically adjusts the clamp 2 to fit the animal's muzzle as illustrated in fig.13. This prevents the animal from opening its jaws again. If the animal's teeth, especially the canines, are locked around frame 1 and trigger 3, said frame 1 cannot be extracted from the muzzle of the animal without human intervention as illustrated in fig.13. Said clamp 2 is prevented from opening again by the said ratcheting mechanism 11. Therefore once the animal closes its jaws around the trigger 3 and frame 1 and triggers, releases, snaps shut and closes the Muzzle Clamps, it will not be able to open them again until it is released by the Animal Control Officers.

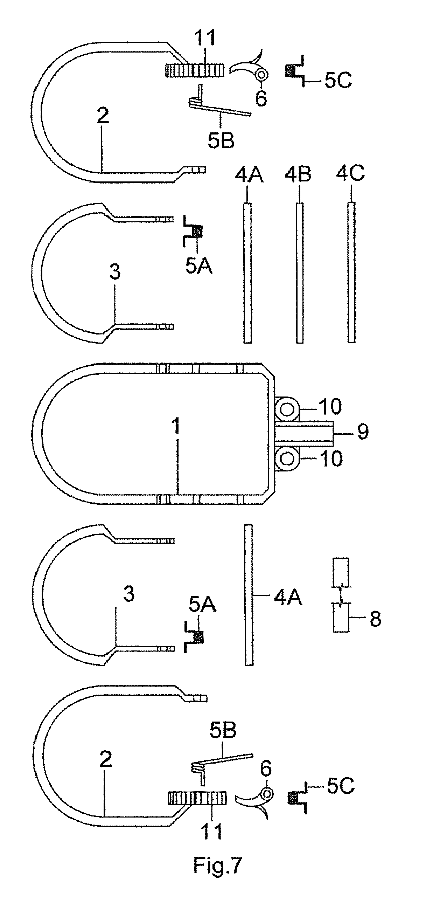

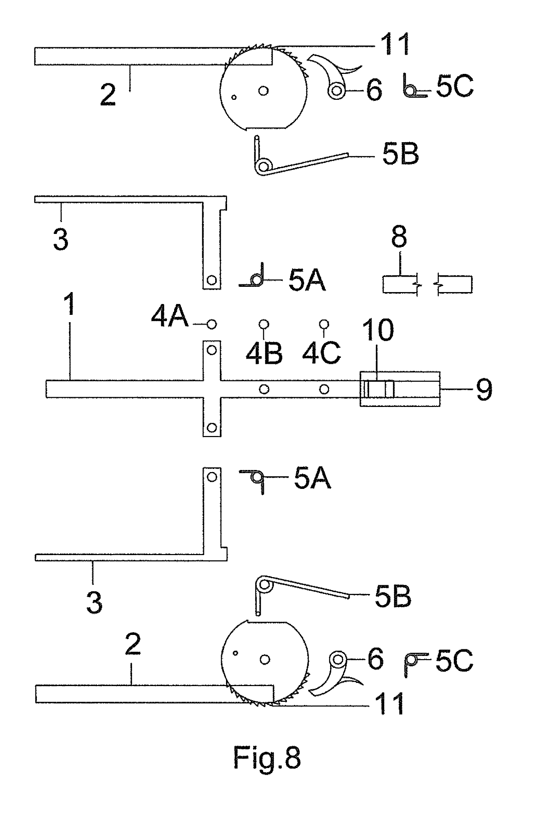

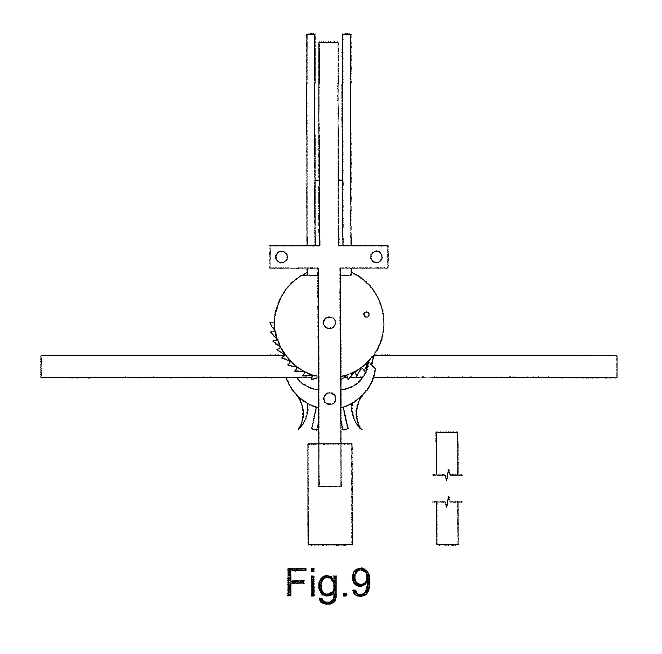

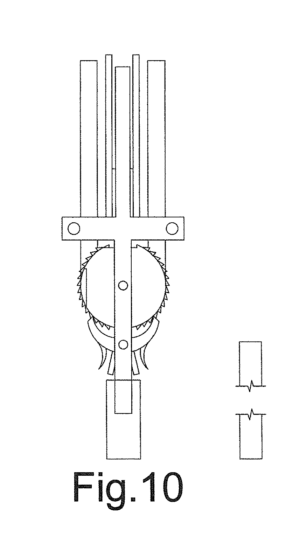

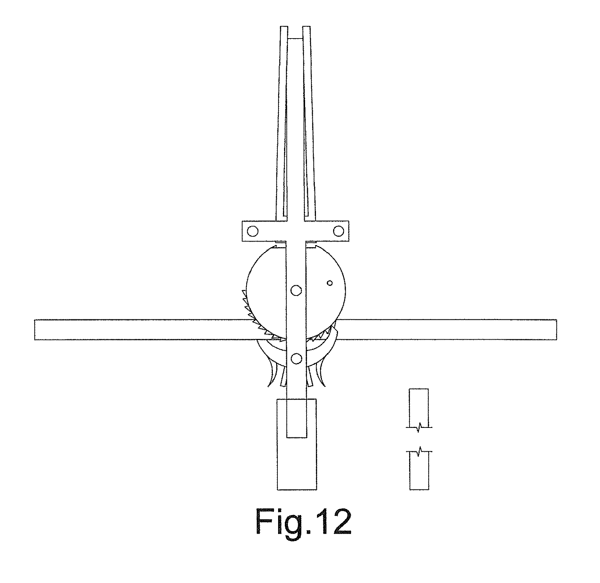

Figs.7 to 10, and fig.12, illustrate a second embodiment of the present invention comprising at least one frame 1. At least one axle 4A is attached to said frame 1. At least one trigger 3 is moveably attached to said axle 4A. Said trigger 3 is kept open by means of at least one spring 5A. At least one axle 4B is attached to said frame 1. At least one clamp 2 is moveably attached to said axle 4B. Said clamp 2 is kept open by means of at least one spring 5B. At least one ratcheting mechanism 11 is attached to said at least one clamp 2. At least one axle 4C is attached to said frame 1. At least one pawl 6 is moveably attached to said axle 4C and operates on said ratcheting mechanism 11 gear, and is pushed against said ratcheting mechanism 11 by at least one spring 5C. When the clamp 2 is triggered, released and snapped shut and is closed by trigger 3, the ratcheting mechanism 11 automatically adjusts the clamp 2 to fit the animal's muzzle as illustrated in fig.13. This prevents the animal from opening its jaws again. If the animal's teeth, especially the canines, are locked around frame 1 and trigger 3, said frame 1 and trigger 3 cannot be extracted from the muzzle of the animal without human intervention as illustrated in fig.13. Said clamp 2 is triggered, released, snapped shut and is closed by said trigger 3. When said trigger 3 is pulled or bitten by the animal, as illustrated in fig.12, the clamp 2 is triggered, released, snapped shut and is closed as illustrated in fig. 10 by spring 5B. Said clamp 2 is prevented from opening again by the said ratcheting mechanism 11 Therefore once the animal closes its jaws around the trigger 3 and frame 1 and triggers, releases, snaps shut and closes the Muzzle Clamps, it will not be able to open them again until it is released by the Animal Control Officers.

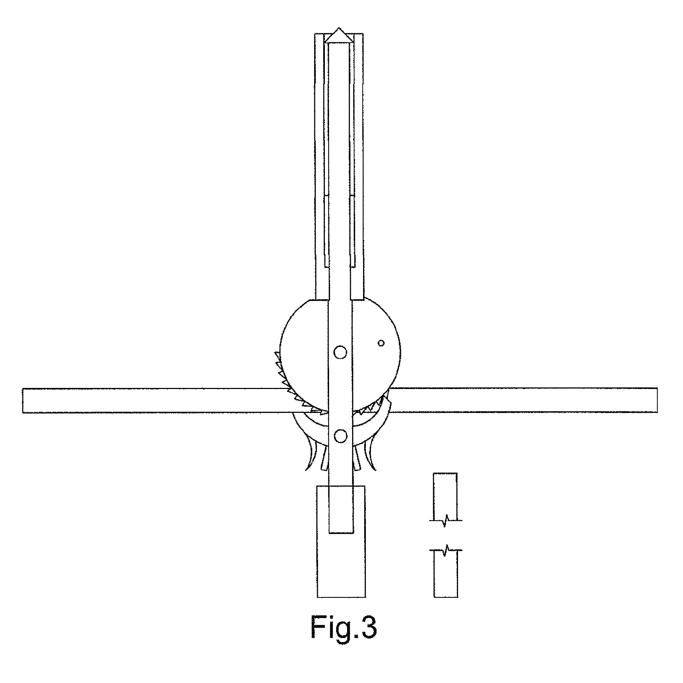

The said Muzzle Clamps in any embodiment, may be preferably detachably attached to a staff 8 by means of a socket 9 from which it may be released by way of any release mechanism when said Muzzle Clamps has been triggered, released, snapped shut and is closed. When said Muzzle Clamps has been released from the staff 8 the animal can preferably be controlled by at least one leash that may be attached to at least one leash attachment ring 10. The said Muzzle Clamps may have at least one pawl 6 which may be released so as to let the muzzle of the animal be freed again when desired, so that the Muzzle Clamps can be opened, set, and used again as illustrated in figs.3, 4, and 9.

## Claims

1. Muzzle Clamps comprising:
(i) at least one frame (1),
(ii) at least one clamp (2),
(iii) at least one trigger (3),
(iv) at least one ratchet mechanism (6), and (11),
(v) at least one spring (5),
(vi) at least one yoke (7)
**characterized by the fact that** at least one clamp (2) may be moveably attached to at least one frame (1) wherein said clamp (2) may be triggered by at least one trigger (3), closed by at least one spring (5), and held in the closed position by at least one ratchet mechanism (6) and (11).

2. Muzzle Clamps according to claim 1 in which said at least one trigger (3) may be moveably attached to at least one yoke (7), which may be moveably attached to said at least one frame (1).

3. Muzzle Clamps according to claim 1 in which said at least one trigger (3) may be moveably attached to at least one frame (1).
